# EUROPEAN PATENT APPLICATION

(11) **EP 2 256 920 A2**
(43) Date of publication of application: **01.12.2010**
(21) Application number: 10162825.3
(22) Date of filing: 14.05.2010
(51) Int. Cl.: H02P 1/42

(54) **Motor control systems**

(30) Priority: 26.05.2009 GB 0908901; 16.10.2009 GB 0918163
(71) Applicant: B.D.G. el s.p.a., 21020 Bardello (IT)
(72) Inventor: Ryan, Paul Thomas, Huntingdon, Cambridgeshire PE28 4AQ (GB); Mazzani, Luis, 21020 Bardello Varese (IT)
(74) Representative: Martin, Philip John

(57) **Abstract**

A starting/boost control system for a refrigerator compressor, the refrigerator compressor comprising an induction motor having a main winding and a starting/boost winding, the motor being energised from a single phase of an AC mains power supply, the starting/boost control system comprising: an electronic controller having a power supply derived from said AC mains power supply; a sense input coupled to said electronic controller to sense a degree to which said motor is running; a control output to control starting/boost of said motor; a controllable switch having a control connection coupled to said control output to switch power from said AC mains power supply to said starting/boost winding; and an impedance coupled in series with said switch between said AC mains power supply and said starting/boost winding; and wherein said electronic controller is configured to respond to a sensed motor condition dependent on said degree to which said motor is running to perform one or both of: i) opening of said switch to disconnect said starting/boost winding responsive to a determination that said motor has started following application of said AC mains power supply to said main winding of said motor; and ii) closing of said switch to re-connect said starting/boost winding to said AC mains power supply responsive to a determination that a mechanical output of said motor is to be boosted, until said electronic controller determines that a defined condition of said motor is met.

## Description

### FIELD OF THE INVENTION

This invention relates to the field of starting of induction motors that operate from single phase AC voltage and more particularly induction motors which have a main or run winding that is powered during all of the running time of the motor and a starting or auxiliary winding that is powered to start the motor, or is powered at a higher level during starting compared to the power level during running. More particularly it relates to such motors used to operate compressors for refrigeration.

### BACKGROUND TO THE INVENTION

Induction motors are well known and widely used. When operating from multiphase (e.g. 3 phase) supplies they can be started easily because the phase differences of the supply generate the rotating magnetic field that is necessary to start the motor. When operating from single phase supplies, some method is needed to generate a phase difference between currents in windings of the motor or other means to achieve a rotating magnetic field. Among the known techniques is "resistance starting". In this method, the motor is typically provided with two stator windings, a "main" or "run" winding that is permanently energised by AC voltage during running, and a "start" or "auxiliary" winding that is energised at a high level to start the motor then is unpowered, or powered at a low level during running.

These windings are wound on the stator typically with their magnetic axes at 90° and they are wound with different numbers of turns and gauge of wire. In addition, the Auxiliary winding may be powered from the AC voltage via a resistive component. By choosing the value of any external resistance and the numbers of turns and gauges of the wires of the two windings, it is possible to achieve sufficient phase difference between the currents in the two windings to generate sufficient effective rotation of the net magnetic field to start the motor. Typically the main winding is wound from thick wire of many turns so it has a low resistance and a large inductance (when the motor is stationary) whereas the Auxiliary winding is made from fewer turns of thinner wire so has a lower inductance and higher resistance. When activated by AC voltage, the phase of the current in each winding depends on the ratio of its inductance to the total circuit resistance (winding inductance plus any external series inductance) so the relatively higher inductance to resistance of the main winding causes the current in the main winding to lag in relation to current in the starting winding. This phase difference of current, though less than 90°, causes the net magnetic field to have a rotating component which starts the motor.

The motor accelerates in response to the rotating magnetic field, reaching a stable condition of rotation speed while the Main and Auxiliary windings are both energised. In this condition the rotation of the magnetic field is an imperfect match to the rotation of the rotor. Particularly, the rotation and amplitude of the rotor magnetisation does not match well to the main winding in relation to the applied AC voltage. Hence there is a significant current in the main winding. If the current in the Auxiliary winding is disconnected, and assuming that the motor has a low shaft load torque, the motor typically increases in speed to the normal operating speed. In this condition there is a better match between the rotating rotor flux and the flux from the Main winding, hence the current in the Main winding reduces.

During normal running AC voltage is applied to the Main winding and this connection provides most of the power to operate the motor. Optionally, a current can be applied to the Auxiliary winding via a "run capacitor" from the AC voltage source. Using a capacitor in this connection provides a large phase shift between the current in the Main winding and the current in the Auxiliary winding. This large phase difference ensures that the auxiliary winding current increases the available torque and overall efficiency of the motor.

If an increasing mechanical load is applied to the motor, the rotor slows relative to the frequency of the AC mains supply (there is more "slip" between the rotor and the effective magnetic field from the stator). As slip increases, so does the current (and power) taken by the Main winding from the AC voltage source.

Motors are typically designed to provide sufficient torque for the maximum expected duty and to optimise efficiency (mechanical output power in relation to the electrical input power). However typical applications rarely operate motors at their maximum available output torque, often they are operated a small fraction of the available torque for most of their operating time and it is under these conditions that the efficiency is most important. In most applications there are other important factors such as minimising manufacturing cost and the overall size/weight of the motor. For a given size or cost the optimum design for a maximum output mechanical output power is usually different for the optimum design for maximum efficiency at part load. The consequence is often that reduced motor efficiency has to be accepted within the constraints of size, cost and required maximum output power.

A conventional method to start motors of this type is to include a thermistor with positive temperature coefficient ("PTC") in series with the Auxiliary winding and the AC voltage source. The PTC is cold before starting, so has a relatively low resistance. This allows a high current to flow in the Auxiliary winding but also the resistance of the PTC adds to that of the winding to increase the phase difference between Main and Auxiliary winding current. The large current flowing through the resistance of the PTC causes it to heat, after a time reaching a switching temperature above which the resistance rises rapidly. The effect is that the current in the winding is maintained for a short time (0.5-5s) then rapidly reduces. The PTC stabilises at a high temperature where the power dissipated in the high resistance of the PTC balances the heat power lost from the PTC (typically about 2W). The current flow in this condition is low so the Auxiliary winding is effectively unpowered from the AC supply.

In addition to a starting device, it is typical to use an overload protector (OLP) with such motors. A conventional type uses a combination of a low-resistance heater and an over-temperature switch (bimetal, with contacts). The heater and switch are both connected in series with the AC supply and the motor so that the motor current flows through the resistance heater and the supply is interrupted if the switch opens due to high temperature. It is located close to the motor so that a high motor temperature promotes tripping. This arrangement is sensitive to current and temperature and it is designed to give a particular characteristic of tripping current and tripping time that varies with motor temperature. So it disconnects power if the motor is cold but takes a large current for longer than a particular time or if the motor takes a moderate current for a long time but is running at a high temperature. This protects against conditions that could cause overheating of the motor windings.

It is important to reduce energy consumption and one target is the power dissipated in the PTC to keep it hot during normal running of the motor. One method to reduce the power is to replace the PTC by a "starting relay" where the current in the Main winding passes through a coil in the relay. The high current in the main winding causes contacts in the relay to close, applying power to the Auxiliary winding. When the motor is running the lower current in the Main winding is not sufficient to keep the contacts closed so they open to disconnect power from the Auxiliary winding. Though it is effective, it lacks design flexibility and has several disadvantages. For example, the Auxiliary winding must have high resistance to achieve the necessary phase difference in current to start the motor, which causes waste of power particularly if the motor is used with a run capacitor.

One method to reduce power consumption of the PTC is to insert a switch in series with the PTC so that it can be disconnected after the motor has started, as described in EPO 820 621 A. However it is desirable to improve upon this approach.

### SUMMARY OF THE INVENTION

According to a first aspect of the invention there is therefore provided a starting/boost control system for a refrigerator compressor, the refrigerator compressor comprising an induction motor having a main winding and a starting/boost winding, the motor being energised from a single phase of an AC mains power supply, the starting/boost control system comprising: an electronic controller having a power supply derived from said AC mains power supply; a sense input coupled to said electronic controller to sense a degree to which said motor is running; a control output to control starting/boost of said motor; a controllable switch having a control connection coupled to said control output to switch power from said AC mains power supply to said starting/boost winding; and an impedance coupled in series with said switch between said AC mains power supply and said starting/boost winding; and wherein said electronic controller is configured to respond to a sensed motor condition dependent on said degree to which said motor is running to perform one or both of: i) opening of said switch to disconnect said starting/boost winding responsive to a determination that said motor has started following application of said AC mains power supply to said main winding of said motor; and ii) closing of said switch to re-connect said starting/boost winding to said AC mains power supply responsive to a determination that a mechanical output of said motor is to be boosted, until said electronic controller determines that a defined condition of said motor is met.

Embodiments of the above described approach facilitate efficient use of the auxiliary winding and flexible control of the starting/boost operation which in turn enables power saving and a more "green" approach.

In some preferred embodiments the impedance is a resistive impedance, in particular a PTC thermistor, and the controller is configured to open the switch when it has made a determination that the motor has started sufficiently to continue without further power being applied to the starting/boost winding. This enables the power in the PTC to be cut earlier than it would otherwise be, thus providing a power saving. Parameters which may be employed to determine the motor running condition include the main winding current and/or current - phase and/or voltage, or even a parameter such as a degree of vibration of the motor. One particularly preferred approach, however, senses a combination of phase and magnitude of the main winding current relative to the phase of the AC mains power supply (voltage) to determine the degree to which the motor is running. (A combination of the main and auxiliary i.e. starting/boost winding current may be sensed since the auxiliary winding current is relatively small). In one approach such sensing is performed by sampling a current dependent on the main winding current, preferably synchronously with the AC mains. Such sampling is phase-sensitive when performed at a plurality of points during an AC cycle, but preferably sampling at a plurality of points during a half-cycle is employed for noise reduction. Further preferably a set or burst of samples is captured during part of a positive and part of a negative half-ycle and these two data sets used, for example by taking a difference between them to determine a phase sensitive measure of the main winding current.

The above described approach is particularly sensitive to the operating conditions of the motor, which is desirable, but one potential disadvantage is that this sensitivity results in the measured phase "gyrating" and therefore in embodiments an averaging procedure is also employed. For example a running average may be determined during an initial start-up period and then either a proportional or absolute change from this detected, optionally resetting the average if a stall or other start-up fault condition is detected.

Whether or not a phase sensitive detection of main winding current is employed, in some preferred embodiments the electronic controller is configured to determine a motor condition by determining an average value of a signal derived from the sense input over an initial period after application of the AC mains power supply. Then the controller may identify when to respond to the sensed motor condition, for example to open or close the switch, by determining a deviation of a value dependent on the sensed motor condition from this initial period average value. In general such an approach may be employed using current magnitude and/or phase and/or the voltage across the motor. The skilled person will appreciate that this approach may be employed to close the switch to boost power to the motor as well as opening the switch when the motor has adequately started, as described further below. To identify a transient load for boosting the motor another parameter which may be employed is rate of change of main winding current; optionally detection of a boost condition and/or stopping of a motor boost may compensate for a voltage and/or temperature of the motor with the aim of providing maximum boost without overload/damage to the motor.

In embodiments the electronic controller derives a power supply from after a switched AC mains power supply to the motor, thus reducing power consumption. However in embodiments it may be desirable to control opening/closing of the switch dependent on a value such as the previously mentioned initial period average value derived from a previous switching cycle of the induction motor (refrigerator compressor). Thus in some preferred embodiments of this type the electronic controller may include a memory element to store data derived from a previous switching cycle, which may be employed in a current switching cycle to provide improved efficiency start and/or boost of the motor.

More particularly, in embodiments the electronic controller power supply is derived from a switched version of the AC mains power supply provided to the main winding of the motor, and the electronic controller includes a memory element to store data derived from the sense input for use in performing one or both of the switch opening and the switch closing after interruption of the AC mains power supply to the electronic controller and motor. However a memory of a previous starting cycle may be used whether or not power has been interrupted to the controller.

In embodiments a start and/or boost time of the motor may be determined and then iteratively reduced on successive switching cycles until the motor is at a threshold of proper starting.

Embodiments of the system use a DC power supply for the electronic controller and to provide useful power savings it is important that this is derived efficiently. One solution to this problem is, counter-intuitively, to rectify a voltage from the AC mains power supply and then to employ a series regulator transistor to reduce this to a voltage for the electronic controller - although this is inefficient during start-up /boost it is efficient at other times and thus overall beneficial. Another solution is to rectify a voltage across the heating resistance of an overload protector for the induction motor (or other series resistance which is always on when the motor is on).

The skilled person will appreciate that these power supply techniques may be employed independently of application of the power to an induction motor starting/boost system. For example they may be employed to power an electronic thermostat or, more generally, a microcontroller or other electronic circuit.

Thus in a further aspect the invention provides a (dc) power supply circuit comprising to rectify a voltage across the heating resistance of an overload protector for an induction motor (or other series resistance through which current is flowing when the motor is on). Optionally an additional (dc) power supply may be derived, for example by rectifying a voltage from the AC mains power supply and then employing a series regulator transistor to reduce this to a lower dc voltage. Optionally one such dc power supply, for example the series regulator, may be employed at a first time, say at motor start-up, and the other at second time, say after start-up. Thus there is also provided a method of powering an electronic circuit or microcontroller from an ac power supply of an induction motor, the method using a first dc power supply, for example a series regulator transistor, at a first time, say at motor start-up, and a second dc power supply at second time, say after start-up.

Options for detecting a transient load of a motor for controlled closing of the switch to boost the motor output have been described; in embodiments the boost may be continued until the controller determines that a defined condition to protect the motor from overload has been met. This may comprise a timer for example with a preset time, or a direct or indirect sensing of the motor temperature may be employed, or a combination of sensed current and/or voltage may be employed, or some combination of these may be used. For example turn-off of the switch may be responsive to the rate of change of sensed current being less of the threshold, or to the voltage induced in a winding (in particular the auxiliary winding) of the motor, or a rate of change of this voltage, being less than a threshold, or responsive to the integrated main winding current (or a value dependent on this) being greater than a threshold value. Optionally the threshold may be determined from a previous switching cycle. Optionally such approaches may additionally or alternatively be employed to control the opening of the switch during start-up of the motor. Optionally the controller may compensate for one or both of a sensed AC mains voltage and a directly or indirectly sensed temperature of the motor, to enable the boost to continue for longer than would otherwise be the case when the voltage/temperature is low so that there is a reduced risk of the motor overheating.

In a related aspect there is provided a method of controlling a refrigerator compressor, the refrigerator compressor comprising an induction motor having a main winding and a starting/boost winding, the motor being energised from a single phase of an AC mains power supply, the method comprising: powering an electronic controller from a switched AC mains power supply to said induction motor; sensing a degree to which said motor is running; switching power from said AC mains power supply to said starting/boost winding using a switch, wherein an impedance is coupled in series with said switch between said AC mains power supply and said starting/boost winding; and using said electronic controller to respond to a sensed motor condition dependent on said degree to which said motor is running to perform one or both of: i) opening of said switch to disconnect said starting/boost winding responsive to a determination that said motor has started following application of said AC mains power supply to said main winding of said motor; and ii) closing of said switch to re-connect said starting/boost winding to said AC mains power supply responsive to a determination that a mechanical output of said motor is to be boosted, until said electronic controller determines that a defined condition of said motor is met.

In a further aspect the invention provides an induction motor control system for controlling an induction motor having a main winding and a secondary winding, the control system comprising: a system to control power to said secondary winding to start and run the motor at a first level of mechanical output; and an electronic boost system to boost said level of mechanical output from said motor; wherein said electronic boost system comprises a system to sense a current in said main winding and responsive to said sensing to boost electrical power to one or both of said main winding and said secondary winding responsive to said sensed current, and to cease said electrical power boost on determination that a defined condition of said motor is met.

In embodiments the power boost is implemented by boosting power in the main winding of the induction motor. For example the main winding may be operated on a reduced duty cycle current synchronously switched with the AC mains, and the duty cycle increased to boost the power output of the motor. Additionally or alternatively the motor may be provided with a tapped main winding which is switched to boost the effective main winding magnetic field, and hence the mechanical power output of the motor.

The invention thus also provides a method of operating an induction motor of a refrigerator compressor, the induction motor having a main winding and a secondary winding, the method comprising: operating said induction motor; sensing a current in said main winding; boosting power to one or both of said mains and secondary windings responsive to said sensed current to boost an available output torque of said motor by at least 25%, preferably at least; and ceasing said power boost on determination that a defined condition of said motor is met.

This approach allows the motor design to have optimal efficiency at low load, recognising that for the majority of the time the motor is not operating at a high load. Providing a 25% available output torque boost provides headroom enabling a designer to design a motor for increased efficiency in normal use; in embodiments a 30%, 40% or 50% available output torque boost may be provided. The operating of the induction motor may, in embodiments, comprise operating the motor, on average, at a power of at least 50% of a power rating of the motor, said operating power defining an available output torque of said motor. In embodiments the induction motor is operated, on average, at a power of at least 30%, 40%, 50%, 60%, 70% or 80% of a power rating of the motor.

In embodiments of the above described method of operating an induction motor, counter-intuitively the power may be reduced or removed from the first, "main" winding in the higher power "boost" condition when the power is applied to the secondary winding. This is because the first winding may be at a different mechanical phase to the secondary winding and thus for optimum driving should be driven at a different electrical phase to the first winding (or the windings should be arranged so that they are at substantially the same mechanical phase). Thus in embodiments, effectively the boost function swaps the electrical drive from one winding, the main winding, to another, the secondary winding.

### BRIEF DESCRIPTION OF THE DRAWINGS

These and other aspects of the invention will now be further described, by way of example only, with reference to the accompanying Figures in which:
Figure 1 shows typical behaviour of a refrigerator compressor induction motor with an auxiliary winding controlled by a PTC;
Figure 2 shows a reduced energy consumption approach;
Figure 3 illustrates the energy saving of Figure 2;
Figure 4 shows a first example of a starting/boost control system for a refrigerator compressor induction motor according to an embodiment of the invention;
Figure 5 shows an alternative sensing arrangement for the embodiment of Figure 4;
Figure 6 shows a further alternative sensing arrangement for the embodiment of Figure 4;
Figure 7 shows an example flow diagram for the electronic controller of the embodiment of Figure 4;
Figure 8 illustrates an example of a preferred averaging process for use with embodiments of the invention;
Figure 9 illustrates synchronised phase-sensitive current sampling for us in some preferred embodiments of the invention;
Figure 10 illustrates a first example of a motor control system with a boost function;
Figure 11 illustrates a second example of a motor control system with a boost function;

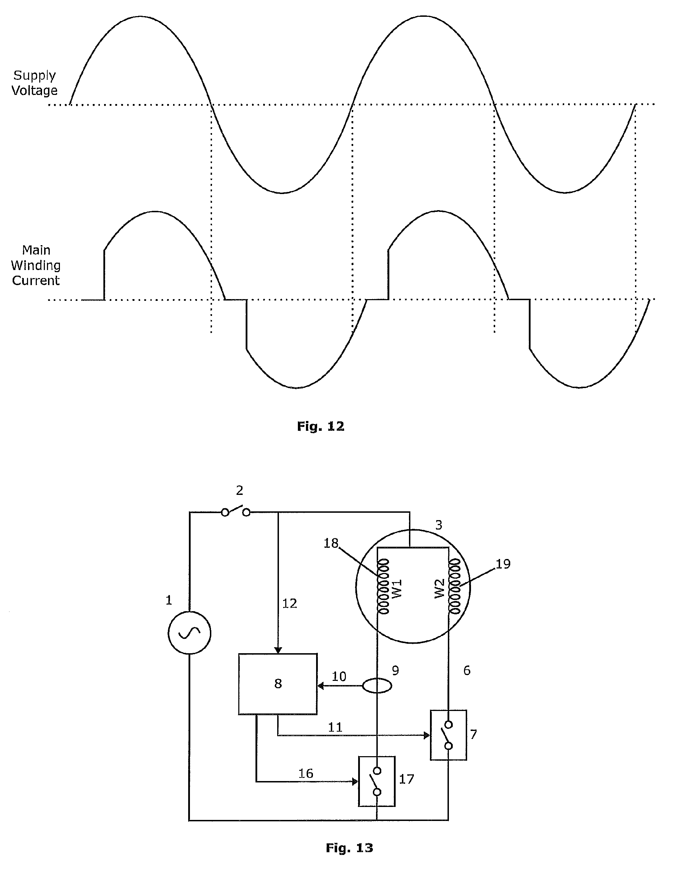

Figure 12 illustrates an example of duty cycle control to provide an induction motor boost function for a refrigerator compressor;
Figure 13 illustrates a third example of a motor control system with a boost function; and
Figure 14 illustrates a fourth example of a motor control system with a boost function.

### DETAILED DESCRIPTION OF PREFERRED EMBODIMENTS

We will describe a motor control system; its features and benefits optionally include:
- Use an electronic switch to control power to the auxiliary winding to avoid wear and acoustic noise.
- Control the electronic switch to reduce the energy used to start the compressor
- Control the electronic switch to re-apply power to the Auxiliary winding if the motor is subjected to a high transient load while it is running so that the motor can continue running instead of stalling.
- Control electrical power to the motor via one or more switches in order to boost motor output for extended periods of high motor load.
- Arrange the motor design for highest efficiency at part load and for the ability to provide boosted mechanical output via electrical control of the windings.
- Consume no, or low, additional power in the control device.

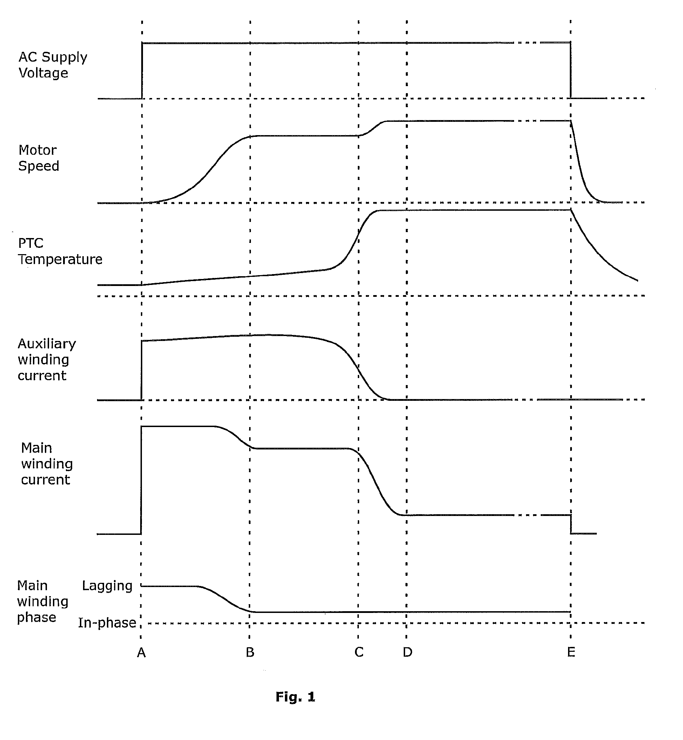

Figure 1 shows the typical behaviour of a motor with Auxiliary winding controlled by a PTC. At time "A" the motor is stationary, the PTC is cold and power is applied to the Main winding and to the Auxiliary winding via the PTC. The motor accelerates until it reaches a substantially constant speed by time "B". As the motor reaches this speed, there is a corresponding reduction of current in the Main winding. In the Auxiliary winding current is still flowing, possibly at a slightly higher level because PTCs often exhibit a lower resistance at intermediate temperatures compared to low temperatures. It is normal for the system to be designed so the PTC does not reduce the Auxiliary current until significantly later than the time when the motor is running. This is necessary to ensure that the motor will start reliably under adverse conditions (residual motor load, high motor temperature, worn motor with mechanical resistance etc.). Around time "C" the temperature of the PTC rises rapidly so there is a fast decrease of Auxiliary current. The reduction of current allows the motor to accelerate to the normal running speed and the current in the Main winding reduces accordingly. Conditions remain substantially constant from time "D" (unless the mechanical load changes) until the supply to the motor is disconnected later at time "E".

Between times "B" and "C" the additional power applied to the Auxiliary winding is not providing a benefit in terms of improved starting. This causes unnecessary energy consumption as a result of the extended time for which Auxiliary power is applied and for the increased Main winding current during this time. So, if the Auxiliary winding power is disconnected earlier, around time "B", there will be a reduction of total energy consumed during starting of the compressor.

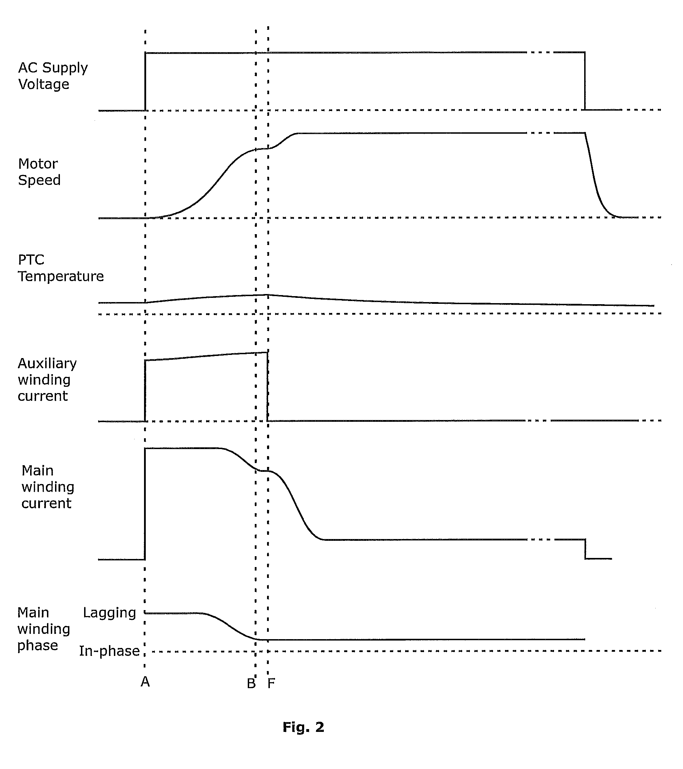

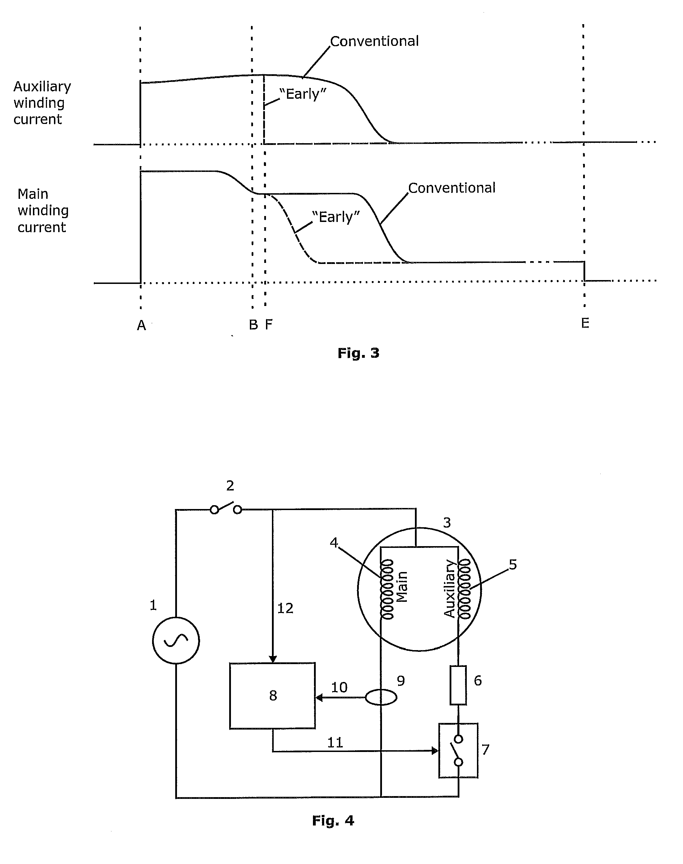

Behaviour like this is shown in Figure 2. Up to time "B" the conditions are the same as shown for the conventional starting in Figure 1. At time "F", a short time after time "B", power is disconnected from the auxiliary winding and the motor speed increases to the normal running speed. Motor currents reduce earlier compared to the conventional start. This is summarised in Figure 3. For both the Main and Auxiliary winding, current profiles are shown for conventional starting and for "early" disconnection of the auxiliary current. It can be seen that there is a significant reduction of integral of current for both Auxiliary and Main windings, so there will be a corresponding reduction of energy consumed during the starting process.

A system is shown in Figure 4 that implements this method of early disconnection of Auxiliary winding current. AC Power source 1 (mains supply, for example) connects to motor 3 via switch 2. This switch is used to turn the motor on and off; an example is a thermostat in a refrigerator where the motor operates the compressor to provide the cooling. Motor 3 is provided with a Main and an Auxiliary winding, the Main winding being powered from the power source while switch 2 is closed. Auxiliary winding 5 is powered from the source via switch 7 and resistance 6. The latter is included to improve starting, as previously described, and could be a fixed resistor or a PTC. Switch 7 can be any suitable switch such as a triac, electromagnetic relay or combination of devices such as power MOSFETs or IGBTs. Some of these devices can switch only unipolar current, so to switch AC current need to be used in pairs or in conjunction with a full-wave rectifier. Control circuit 8 accepts a signal 10 from a current sensor 9 associated with the Main winding. Circuit 8 processes the signal and provides a control signal 11 to close or open switch 7. Optionally, control circuit 8 may accept a signal or power from the power source 1 before or after (as shown) switch 2.

Circuit 8 is arranged to:
- Close switch 7 when power is applied to the motor. The circuit detects this either via the current in the main winding, indicated by signal 10, or by increase in voltage indicated by signal 12. When switch 7 is closed, power is applied to Auxiliary winding and the motor starts to rotate.
- Either before or shortly after closing switch 7, circuit 8 samples (or measures) the current in the main winding, as represented by signal 10.
- While the motor is starting, the circuit monitors the current in the main winding (via signal 9) to detect when the current has fallen by more than preset fraction. For example, from the initial sampled level of signal 10, a threshold is derived as a fraction of the sample. Subsequently, the level of signal 10 is compared to this threshold.
- Signal 10 may also be processed to detect that it is steady. Indicating that the motor has either not started or has reached a constant speed after starting.
- When the circuit detects the current has fallen by more than the preset fraction and/or the signal 10 has reached a steady value after falling, the circuit opens switch 7 via control signal 11. Optionally, the circuit may delay opening of the switch by a preset time delay to ensure the motor has properly started.
- Optionally, if the circuit does not detect a sufficient fall of the current within a preset time limit, it opens switch 7 as if the current had reduced. This preset time limit is chosen to be longer than the maximum starting time of the motor.
- Switch 7 is maintained in the open condition until power is removed from the motor then re-applied. This sequence is detected by circuit 8 either via the current in the main winding (via signal 10) or from fall of voltage applied to the motor, as sensed by signal 12.

For reliable operation it is important that the circuit is insensitive to small variations of the main winding current that may occur early in a normal starting process but which do not indicate full starting of the motor. A preferable method to do this is to estimate motor current during a short period after power is initially applied to the motor. The period is chosen to be shorter than any normal time taken to start the motor and variations in current in this period can be monitored.

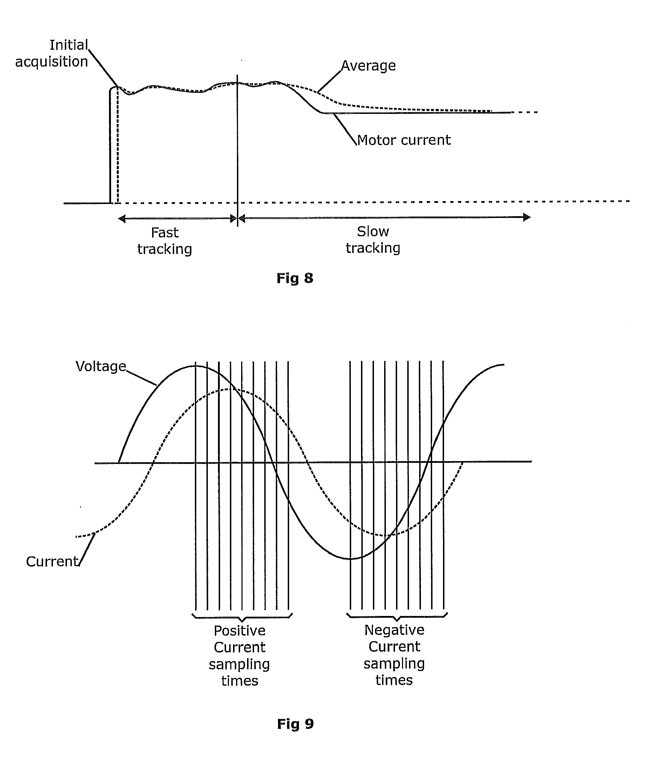

A preferable method is to use an "exponential decay average" calculation. In this, an average value is updated when a new sample of motor current is taken and new average is calculated as (1-X)*average + X*Sample, where X is a small fraction. Higher values of X causes faster response to changing currents. This average calculation as started with a first initial sample (Average = Sample), then the tracking rate can be changed subsequently by varying the X factor. With a low value of X factor, the average will change slowly (assuming regular samples are taken). The process is illustrated in Figure 8. The objective is to make an accurate estimate of the average motor current before the time the motor could have properly started.

This average is then used to detect the fall of motor current that results from starting of the motor. When the motor current falls significantly in relation to the average then the motor is deduced to have started. A method to do this is to compare new samples of motor current to the average and if the motor current is lower than the average by a margin (expressed as a fraction of the average) then starting is detected. For improved reliability it is preferable to avoid false detection of starting in a case when only a small number of motor current sample values are low. Conveniently this can be done by using a counter that is incremented whenever a sample is determined to be sufficiently low in value. If any motor current sample is above the threshold then the counter is reset to zero. Reliable starting can then be determined when the count exceeds a preset value. This method has the additional benefit of introducing a small delay from the point when the motor current falls below the threshold when starting is actually determined. This delay is useful to ensure proper starting of the motor.

Techniques described above preferably operate using sample measurements of motor current taken at regular intervals. Because there can be noise and distortion in the voltage and current waveforms it is preferable to sample or measure the current at several points during an AC mains half cycle. Synchronising the sampling to a mains cycle provides an additional benefit which gives increased sensitivity to motor starting. Figure 1 (bottom) shows both the typical motor current profile and the way that the phase of the current varies during the starting process. Initially, when the motor is stationary or running slowly, current in the main winding is typically lagging (inductive). As the motor speed increases the phase of the current moves towards the in-phase condition. If the samples of current are taken in a way that is sensitive to the phase of the current then this can be used to increase discrimination between stationary (or slow) and higher speed (started). An example is shown in Figure 9. Multiple samples of current taken in "bursts" where the timing of the bursts is synchronised to the voltage cycle of the mains supply. Each cycle of the mains supply has a "positive" burst of samples and a "negative" burst of samples. Calculation can be performed where the instantaneous current values in the positive burst summed and those in a negative burst are subtracted. The result of this calculation is a value that is responsive to the phase of the current. Where the phase of the current is aligned with the timing of the bursts a maximum value is obtained and if the phase of the current changes so it is no longer aligned with the burst then the calculated value reduces. Preferably the bursts are synchronised with a lagging phase so the calculated value reduces either if the phase advances or if the current amplitude reduces. Typical motor starting characteristics cause both reduction in the magnitude of the current and advancing of the phase of the current so both of these contribute to reduction in the calculated value. This calculated value of current is then used as described previously to determine an average and to detect when motor current has reduced below a threshold calculated from the average.

Optionally, the circuit 8 may monitor the current in the main winding (via signal 10) during running of the motor. The level of this current is indicative of the loading of the motor, a high current indicates high load. In applications where there can be a transient motor load it can be an advantage to provide extra power to the motor to overcome this transient load. This can be preferable to using a larger motor because a smaller motor is typically lower cost and can have lower energy consumption during the majority of running conditions at lower load. If the load on the motor is excessive it may stall, which is inconvenient and may also cause overheating. To improve resistance to stalling in induction motors like these it is possible to re-energise the auxiliary winding for a short time. This boosts the torque available when the rotor is running slowly (at high slip). When the transient load is reduced or the motor reaches a higher speed (where the torque is sufficient with only the main winding energised) then the auxiliary winding current can be disconnected. Circuit 8 can detect conditions of high load via the current monitor (signal 10) and if it rises sufficiently can close switch 7 for a period to boost power to the motor. Optional methods to detect such transient loads include:
- Current, monitored via signal 10, rises above a preset fraction of the original sample (taken during the last start process).
- As above, but the preset fraction is adjusted to account for change of supply voltage (monitored via signal 12). The supply voltage is measured during the starting process and subsequently during running. The ratio (present voltage/starting voltage) is used as a factor to adjust the threshold fraction.
- As above, but the preset fraction is adjusted to account for increase of Main winding resistance due to increase of temperature. The correction to the threshold fraction can be made as a fixed factor multiplied by the change of motor temperature (measured at some accessible point on or near the motor by an electronic sensor, not shown, connected to circuit 8) from the last starting process to the present condition.
- By deriving a rate-of-increase of current signal then detecting when the rate of change exceeds a threshold calculated as a preset factor multiplied by the level of current (either the initial sample or the present current). A high rate of increase of current is characteristic of the motor being subjected to a heavy transient load.
- Combinations of the above, using weighting factors or the principles of fuzzy logic.

When a high-load condition is detected, the switch 7 can be maintained closed for the duration that the condition persists. To detect this, a reference motor current may be measured immediately after the switch is closed because energising the switch may alter the current taken by the motor. Motor current is then monitored and if it falls below a preset fraction of the reference value then the high-load condition is determined to have finished and the switch can be opened. Alternatively, or additionally, the switch can be held in the closed condition for a maximum of a preset period. The period is chosen to be sufficient to overcome likely high-load conditions but not so long as to cause overheating of the motor.

In some applications and under some conditions it may be beneficial to use the boost function for an extended period and not only to overcome a short term transient condition. For example if the motor is subject to a high mechanical load (in the context refrigerators this can be caused by a hot item inside the refrigerator, which takes time to cool down) then it is preferable that the boost function is continued for as long as the higher load condition persists. The limitation is normally overheating of the motor windings. Another condition could be when the mains supply voltage is low. Here the motor torque will be reduced and the boost function may be useful to overcome normal operating mechanical load. Heating of the motor may also be reduced in conditions of lower mains supply voltage (because reduction of iron loss) so it may be possible to operate in a boost mode for an extended period.

If a high load condition persists for a long time then it may be desirable to stop the boost function (and stop the motor if the reduced motor output power is insufficient to operate the load). Overheating of the motor windings is normally the limiting factor to the degree and length of time for which the boost function may be employed. A system using the boost function preferably also has some method to avoid this overheating. A simple method is to allow the boost function to continue only for a maximum preset time however this will have to be set cautiously to avoid unsafe overheating conditions. Consequently the benefit of the boost function will be reduced. Preferably one or more systems included to allow the boost function to continue for longer periods when there is less risk of overheating of the motor. Techniques to achieve this include:
- Sense temperature at a location near to the motor and reduce the allowable boost time if the sensed temperature is higher
- Monitor the motor current as a predictor of the temperature rise of the windings above the ambient. Use a moving average of motor current in combination measurement of local motor temperature, optionally with some integral function, to predict when the motor windings risk becoming too hot.

Power consumption of the system can be reduced by increasing the motor efficiency, but this is limited by the constraints of size, cost and the need to produce sufficient output power for worst-case load conditions. A further alternative strategy is to design the motor for optimum efficiency under typical (low torque/power) operating conditions and to provide additional features or controls to allow the motor output power to be boosted for worst-case conditions. Since the worst-case conditions happen infrequently, reduced efficiency under these conditions is not so critical. Worst-case conditions can include not only high motor load but also adverse operating conditions such as high motor temperature or low mains supply voltage. Since these conditions can persist for an extended time it is desirable for the "boost" function to operate for longer than just a short transient event. To manage normal and boost operating modes it will be necessary to have a control system capable of distinguishing low and high demand on the motor and protecting against adverse behaviour, for example motor overheating.

The boost function can be used with motors designed only for conventional operation and no boost function. These motors typically use resistance starting and running with power provided to only a main winding, but sometimes low power is applied to an auxiliary winding via a "run capacitor" this could, for example, be connected between the bottom ends of the main and auxiliary windings in Figure 4. A simple application of the boost function to such motors is to reapply high power to the auxiliary winding, for example by closing switch 7 (Figure 4). In this case power is applied to the winding via impedance 6, usually a PTC which has a resistive characteristic. Such motors are normally designed to work with a particular PTC to give adequate starting characteristics. If this circuit is re-energised the motor will provide more torque but only if it is running below its normal operating speed. This may be a useful characteristic under conditions of heavy overload however it would also be limited in duration because of the heating effect on the PTC, which would switch off if the boost function was applied for an extended period. Extended operation can be achieved by using a resistive impedance which maintains its characteristic even if used for a long period.

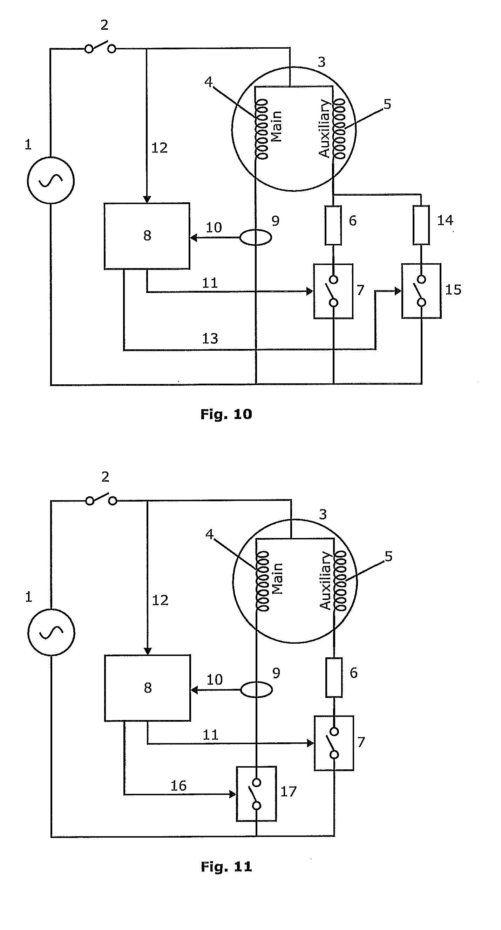

To provide improved torque at normal operating speeds it is desirable to achieve a larger phase difference between the main winding current and the auxiliary winding current when the boost function is applied. With resistive starting the motor requires a phase advance of auxiliary winding current relative to the main winding current. A capacitive impedance fitted in series with the auxiliary winding can give this. If sufficient current is provided by such a capacitive impedance then it can be possible to start the motor using this current instead of using a conventional resistive starting. In this case the system illustrated in Figure 4 would use a capacitor as impedance 6. Alternatively it is possible to apply to current through an additional impedance and switch such as illustrated in Figure 10. A switch 7 and resistive impedance 6 start the motor using resistive starting. Impedance 14 (which is optional) and switch 15 control boost current to the auxiliary winding. Impedance 14 can be resistive or, preferably, capacitive as this would boost torque at higher motor speeds. Some conventional motors are used with a run capacitor connected to provide phase-advanced current to the auxiliary winding during normal running. These provide a lower level of current in the auxiliary winding; to effectively boost operation capacitive impedance 14 may provide a higher level of capacitive current.

Preferably, motors are designed to make optimum use of a boost function and there are several options of how this boost function can be configured with a new design of motor.

| Option | Figure reference | Motor features | Operating method |
|---|---|---|---|
| 1 | 10 | Compared to a conventional motor (i.e. no boost function), the auxiliary winding has a lower resistance and higher inductance. | As described previously, boost current is provided via impedance 14 and switch 15. The reduced resistance of the auxiliary winding allows boost operation for extended periods without excessive heating of the winding. Preferably impedance 14 is capacitive so that there is a large phase angle difference between the current in the main winding and the current in the auxiliary winding. |
| 2 | 11 | The main winding is designed for optimum efficiency when it is operated from phase-switched AC mains supply voltage as shown in Figure 12 but can operate with higher, or full, AC mains supply under conditions of high duty. | Switch 17 (Figure 11) controls power to the main winding. It is turned on synchronously with the mains supply voltage but with a time delay as shown in Figure 12. Turn off of the switch can be coincidental with a zero crossing of the supply voltage or with zero current in the winding (typically in the case of a triac being used as the switch). The effect is to apply a lower RMS voltage to the winding. When the motor is operating below maximum load the reduced RMS voltage is sufficient to provide the required power but power losses are reduced because of the lower magnetic flux and current in the motor. During starting and when high torque is needed Switch 17 is operated at a higher duty or continuously to provide a higher or maximum voltage to the main winding. Switch 7 provides current to the auxiliary winding to start the motor, for example by resistive starting. Optionally Switch 17 can be operated with a small time delay during starting to improve the phase difference between main and auxiliary current. |
| 3 | 13 | Motor 3 is provided with two windings W1 and W2, either of which can be used to run the motor. One winding (W1, for example) applies a higher flux to the rotor so that high torque can be sustained when the motor loading is high. The other winding (W2) applies a lower flux to the rotor to give sufficient flux for lower load conditions. W1 is optimised to give the maximum required torque, while W2 is optimised for maximum efficiency under conditions of reduced torque and. | Switch 7 or switch 17 is closed to energise one or other of the windings. Under conditions of reduced load the winding optimised to those conditions is energised whereas if the motor load is high the other winding is energised. To start the motor either phase-switching needs to be used on one winding while full power is applied the other winding (as described above). Alternatively an impedance can be inserted in series with one of the windings to increase the phase difference between the currents. This may be disadvantageous to the running conditions so a further alternative is to provide an additional switched current path to one winding, for example as illustrated in Figure 10. |
| 4 | 14 | Main winding 4 of the motor is provided with a connection 24 to a tapping point. The winding and tapping point are designed so a high flux is provided to the rotor if the AC mains supply is applied across the tapping point 24 to the common point 25, and a lower flux is generated if the supply voltage is applied to the full main winding. The windings and levels of flux are designed for maximum efficiency at a lower load when the full winding is energised or higher torque output, but lower efficiency, when part of the winding is energised. | Power is applied to the full winding via switch 23 or part of the main winding by switch 21 according to the level of load on the motor. |

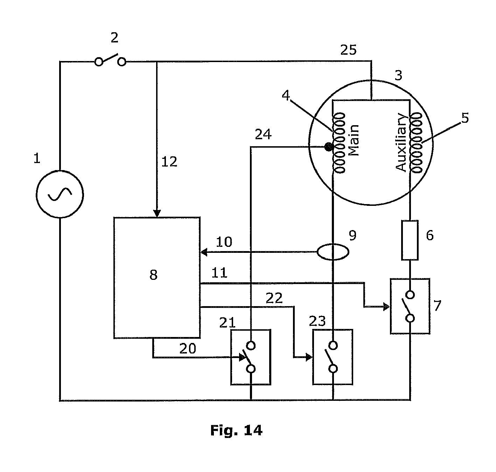

Circuit 8 controls the various switches in the system to start, run and boost the motor. Control of these modes and switching between the modes should be done in accordance with conditions of the motor. These are monitored and communicated to circuit 8. Motor current is an important parameter and Figure 14 shows a sensing device 9 communicating a signal 10 representative of current parameter or parameters (e.g. AC or RMS amplitude, instantaneous amplitude, phase shift relative to reference or wave shape) to control circuit 8. Other characteristic parameters that may be used by circuit 8 to control the system include supply voltage (12) and motor temperature which can be detected by a conventional sensor (e.g. thermistor, thermocouple, semiconductor junction etc.) in proximity to the motor (not shown).

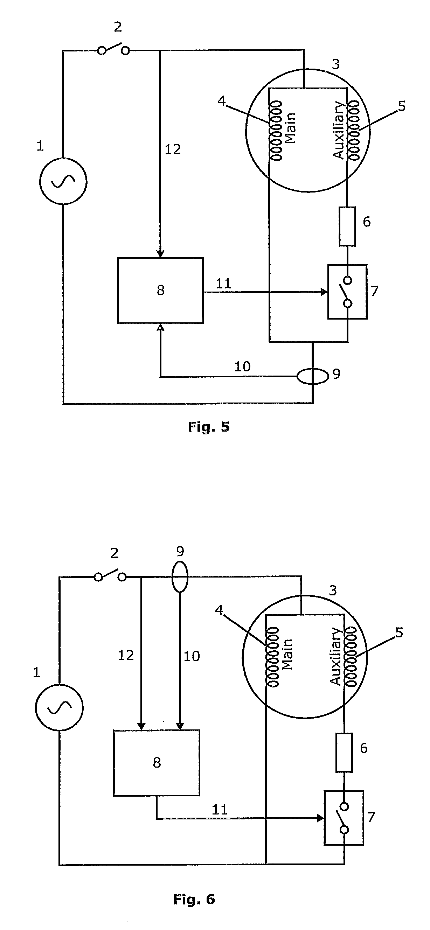

Optional locations for the current sensor 9 are shown in Figures 5 and 6. In both cases, the sensor monitors the sum of Main plus Auxiliary currents. Typically there is only a moderate change of auxiliary current during the starting process, so the fall of main winding current can still be detected reliably but a different fraction should be used for the threshold fraction that is used to trigger disconnection of the auxiliary current. In these configurations it may be convenient to use part of the conventional "overload protector" (OLP) as the current sensor 9. Often an electromechanical OLP is used to protect such motors from overheating during stall or overload conditions, such as described in US2768342. Included in these devices are an electrical resistance heater and this resistance can be used to sense the current flowing through the device. Typically they are inserted in the power supply to the motor and carry both the Main and Auxiliary currents. The voltage across the resistance can be used as the signal 10 to monitor motor current. This is advantageous in two ways:
- Cost of an additional current sensor is avoided.
- No additional power is consumed. In contrast, an additional resistance used to detect the motor current would consume additional power.

Alternative means to detect the motor current (Main only, or Main plus Auxiliary) include:
- Resistance connected in the supply circuit.
- Hall-effect device to detect the magnetic field generated by a conductor carrying motor current.
- Inductive coupling between a conductor carrying motor current and a sensing conductor.

It is preferable to detect current only in the Main winding as this gives more reliable discrimination between the "starting" and "started" conditions. Hence it is preferable to use a current sensor associated with the circuit supplying only the Main winding. A low-cost method is to insert a resistance in this circuit and monitor the voltage across the resistance. However, to avoid consuming significant additional power, the resistance should have a low value, preferably less than 1ohm and more preferably less than 0.1ohm. This gives only a small voltage to detect and this may require amplification before processing to detect fall of current. An economical method to provide such a resistance is to use a length of copper track included in the printed circuit board (PCB) that is also used in the construction of the system.

Where the motor is used in a system that frequently starts and stops the motor (e.g. a refrigerator), an alternative method can be used to determine the necessary time for which switch 7 has to be closed to start the motor. One method is to analyse motor currents and/or voltages after the starting process to determine (calculate) how efficiently the motor started then adjust the timing for switch 7 in subsequent starting processes to reduce the energy consumption. Some techniques to achieve this include:
- Monitor the amplitude of the main winding current after the switch has been opened. If the motor starts efficiently the current falls quickly and remains below a fraction main winding current measured early in the starting process. A high current indicates the compressor stalled or did not start properly. A method to adjust the time used for successive starting processes is to use initially a long time then to reduce the time successively by quanta. This is continued until the rate of fall of main winding current (following a given start process) falls below a threshold, in which case the time is increased for the subsequent start process. Should the main winding current rise above the preset threshold (fraction of the current measured during starting) then it could indicate the motor has stalled. In this case a long time should be used on the following start process to ensure starting, and adjusted automatically thereafter.
- Monitor the amplitude of the voltage induced into the auxiliary winding after switch 7 is opened. An efficient start is characterised by a rapid increase to a substantial induced AC voltage. Stalling or poor starting is indicated by a slow increase of voltage and/or to a low final voltage. Adjustment of the time used can be in a similar manner as described above. A slow rise or to a low voltage causes the on-time to be increased in subsequent start processes
- Monitor the amplitude of the current in the main winding and calculate an integral of current amplitude over a period sufficient to include the consequent behaviour of the motor after starting (e.g. 10 to 20 seconds). Efficient starts will have a low integral, inefficient starts will have a higher integral. To find the optimum timing, the start time used is reduced from an initial long time until the integral (from successive starts) no longer reduces significantly. Once the optimum has been found, it can be tracked by testing longer or shorter on-times for switch 7 in successive starting processes. If a longer time gives a lower integral compared to a shorter time, then the time used is increased by a quantum and vice-versa.

In these methods the control circuit uses an on-time for the switch which varies in response to the result from the previous starting process. Thus continuous power is applied to the control circuit to maintain a volatile memory or the control circuit must include some other store (such as non-volatile memory, or an analog voltage on a capacitor). When the motor is required to be started, the control circuit uses an on-time for the switch 7 that depends on the result of the previous starting process, or a default value where it is the first starting event. After the result of the starting process is detected by the control circuit (e.g. successful/unsuccessful, or quality of start characterised by rate of rise/fall of motor currents or voltages), information is stored to allow adjustment of the time used for the next starting process.

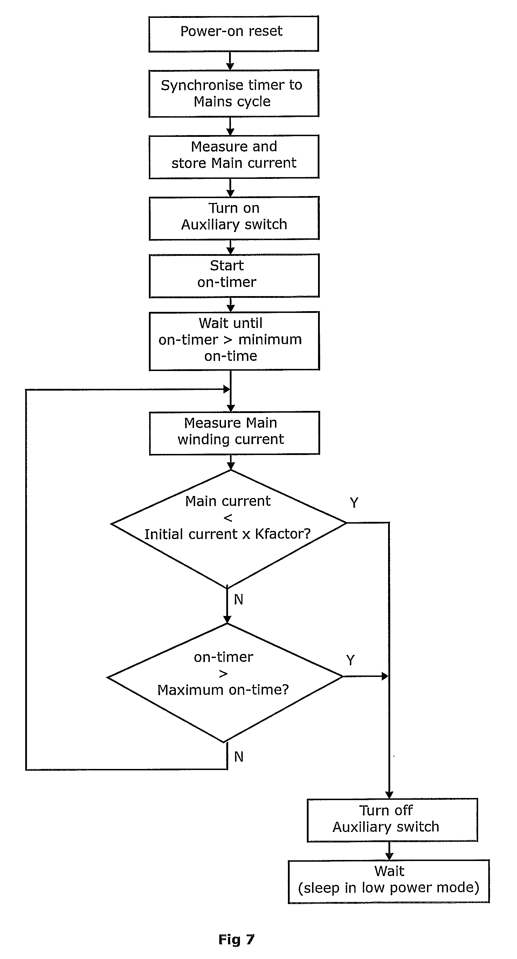

For all of the methods described, the skilled person will appreciate that the control circuit 8 may be constructed in a variety of ways, including:
- Discrete electronic components to make an "analog" circuit and driver for the switch 7.
- A microcontroller, provided with analog-to-digital converters used to measure signals 10 and (optionally) 11 and the motor temperature. The microcontroller employs an operating programme and an example (excluding the optional boost function) is outlined in Figure 7.
- An integrated circuit that includes analog and digital functions optionally to amplify the signals 10 and 11, detect and save their levels during starting, monitor their levels during running, compare their levels to thresholds and to control switch 7 (via signal 11) to close and open it according to the principles described previously.

In order to maximise energy efficiency of the overall system, the control circuit should be arranged to have low power consumption during continuous running of the compressor. Provided that the "boost" option is not included, it is possible for the circuit to enter a low power, quiescent state after the auxiliary switch has been turned off. For example, if a microcontroller is used in the circuit it can be put into a state commonly called "sleep" where power consumption is very low.

Commonly, low power circuits to implement the control function operate from low voltage DC and the means of provision of this power is important to the overall power consumption of the system. One low-cost method is to use a capacitor to derive an AC current from the AC power source, then to rectify and voltage-limit the resulting DC. However this technique consumes about the same power whether or not DC current is taken by the supplied circuits. An alternative is to rectify the AC supply to give high voltage DC then use a transistor as a series regulator to give a low voltage DC supply. This arrangement is very inefficient when DC power is taken, but has very low power consumption if no DC power is drawn. The inefficiency may be acceptable as it applies only for the short starting time and the extra power taken during this period is still a small amount in comparison to the motor power consumption at this time. In the case where the system includes an OLP, another alternative is to rectify (optionally with diode-capacitor voltage multiplication) the voltage across the resistance and use this to power the low voltage circuits. This is low cost because few additional components are required and is effective because the additional power consumption is very small.

We have thus described a motor starting device for an AC induction motor having a main winding and an auxiliary winding, comprising a control circuit, a resistive element and a switch wherein the resistive element, the switch and the auxiliary winding are connected in series with a power source and wherein: the starting device controls the power to the auxiliary winding during a motor starting process; and the control circuit controls the opening and closing of the switch; and the switch is closed to start the motor; and the switch is opened after the motor has started; and the circuit is responsive to a characteristic signal representative of a current or voltage of the motor.

Preferably the said characteristic signal represents a motor current and the control circuit causes the switch to open when a subsequent amplitude of the signal is smaller than a preset fraction of an initial amplitude of the signal. Preferably the motor current comprises the main winding current.

Preferably the motor current is the main winding current. Preferably the control circuit controls the on-time for which the switch is closed and the on-time used in one motor starting process is determined by a said characteristic signal in a previous motor starting process.

Preferably the said characteristic signal is a motor current subsequent to opening of the switch and where the on-time used in a subsequent starting process is reduced when the signal amplitude is below a threshold or reduces at a rate faster than a threshold rate.

Preferably the said characteristic signal is a motor voltage subsequent to opening of the switch and where the on-time used in a subsequent starting process is reduced when the signal amplitude is above a threshold or increases at a rate faster than a threshold rate.

We have also described a motor starting device for an AC induction motor having a main winding and an auxiliary winding, comprising a control circuit and a switch wherein the switch and the auxiliary winding are connected in series with a power source wherein: the starting device controls the power to the auxiliary winding during motor running; and the control circuit controls the opening and closing of the switch and the switch is closed to increase the power to the motor; and the circuit is responsive to a characteristic signal representative of a current of the motor.

Preferably the switch is maintained in a closed condition while the signal is above a fraction of a reference value and the reference value is representative of the motor current at an earlier time. Preferably the switch is maintained in a closed condition for a preset maximum period.

We have also described a control device for an AC induction motor comprising two or more windings wherein the control device comprises a switch to control power applied to at least one winding and wherein: the control device is responsive to current in a motor winding; and the control device determines conditions of higher and lower mechanical motor load; and the control device operates a switch to increase power to the motor under conditions of higher motor load and reduces power to the motor under conditions of lower motor load.

Preferably the switch is operated synchronously with an AC supply voltage so the RMS amplitude of a voltage applied via the switch to a motor winding is lower than that of the AC supply. Preferably the switch is controlled to open and close synchronously with an AC supply voltage to apply a voltage to a winding of phase delayed relative to the AC supply. Preferably the switch is operated to connect a winding of the motor to an AC supply voltage substantially continuously for more than one complete cycle of the supply voltage. Preferably the said connection to the AC supply voltage includes a series impedance.

We have also described a motor system comprising an AC induction motor comprising two or more windings and a control device as above wherein: the system is operable in a condition of higher mechanical output power and a condition of lower mechanical output power; and the control device is responsive to the mechanical load on the motor; and the control device applies higher electrical power to the motor in a condition of higher mechanical load and lower electrical power in a condition of lower mechanical load.

Preferably the control device applies power to one winding of the motor in a condition of lower mechanical load and applies power to more than one winding in a condition of higher mechanical load. Preferably the control device applies power to one winding of the motor only in a condition of lower mechanical load and only to another winding in a condition of higher mechanical load. Preferably the control device applies power only to a part or whole of a winding in a condition of lower mechanical load and only to a different part or whole of a winding in a condition of higher mechanical load.

The skilled person will appreciate that the above described sensing, starting, control and boost features may be employed independently of one another if desired.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. A starting/boost control system for a refrigerator compressor, the refrigerator compressor comprising an induction motor having a main winding and a starting/boost winding, the motor being energised from a single phase of an AC mains power supply, the starting/boost control system comprising:
an electronic controller having a power supply derived from said AC mains power supply;
a sense input coupled to said electronic controller to sense a degree to which said motor is running;
a control output to control starting/boost of said motor;
a controllable switch having a control connection coupled to said control output to switch power from said AC mains power supply to said starting/boost winding; and
an impedance coupled in series with said switch between said AC mains power supply and said starting/boost winding; and
wherein said electronic controller is configured to respond to a sensed motor condition dependent on said degree to which said motor is running to perform one or both of:
i) opening of said switch to disconnect said starting/boost winding responsive to a determination that said motor has started following application of said AC mains power supply to said main winding of said motor; and
ii) closing of said switch to re-connect said starting/boost winding to said AC mains power supply responsive to a determination that a mechanical output of said motor is to be boosted, until said electronic controller determines that a defined condition of said motor is met.

2. A starting/boost control system as claimed in claim 1, wherein said impedance comprises a resistive impedance, in particular a positive temperature coefficient thermistor, and wherein said electronic controller is configured to perform said opening of said switch responsive to a determination that said degree to which said motor is running is greater than a threshold.

3. A starting/boost control system as claimed in claim 1 or 2 wherein said sense input comprises a current sense input, and wherein said electronic controller is configured to sense a phase and/or magnitude of said current relative to said AC mains power supply to determine said degree to which said motor is running.

4. A starting/boost control system as claimed in claim 1, 2 or 3 wherein said electronic controller is configured to perform said sensing by sampling a signal dependent on a current in said main winding of said motor at a plurality of points during a half-cycle or cycle of said AC mains power supply.

5. A starting/boost control system as claimed in any preceding claim wherein said electronic controller is configured to determine a said motor condition by determining an average value of a signal derived from said sense input over an initial period after application of said AC mains power supply and to identify when to respond to said sensed motor condition by determining a deviation of a value dependent on said sensed motor condition from said initial period average value.

6. A starting/boost control system as claimed in any preceding claim wherein said electronic controller includes a memory element to store data derived from said sense input for use in performing one or both of said switch opening and said switch closing.

7. A starting/boost control system as claimed in any preceding claim further comprising a DC power supply circuit to provide a DC power supply to said electronic controller, wherein said DC power supply circuit comprises one or both of: a rectifier to rectify a voltage from said AC mains power supply coupled to a series regulator transistor to reduce a DC voltage derived from said rectified AC mains power supply; and a rectifier to rectify a voltage across the heater resistance of an overload protector for said induction motor to provide said DC power supply.

8. A starting/boost control system as claimed in any preceding claim wherein said defined condition until which said switch is closed comprises a condition to protect said motor from overload.

9. A starting/boost control system as claimed in claim 8 wherein said defined condition comprises a temperature, and wherein said electronic controller is configured to measure or infer said temperature.

10. A starting/boost control system as claimed in any preceding claim wherein said electronic controller is configured to perform said closing of said switch responsive to one or more of a sensed current in said main winding compared with a current in said main winding at starting of said motor, a rate of change of current in said main winding, a voltage induced in the starting/boost winding compared in magnitude or phase to the AC mains supply voltage, and a rate of change of voltage induced in the starting/boost winding.

11. A method of controlling a refrigerator compressor, the refrigerator compressor comprising an induction motor having a main winding and a starting/boost winding, the motor being energised from a single phase of an AC mains power supply, the method comprising:
powering an electronic controller from a switched AC mains power supply to said induction motor;
sensing a degree to which said motor is running;
switching power from said AC mains power supply to said starting/boost winding using a switch, wherein an impedance is coupled in series with said switch between said AC mains power supply and said starting/boost winding; and
using said electronic controller to respond to a sensed motor condition dependent on said degree to which said motor is running to perform one or both of:
i) opening of said switch to disconnect said starting/boost winding responsive to a determination that said motor has started following application of said AC mains power supply to said main winding of said motor; and
ii) closing of said switch to re-connect said starting/boost winding to said AC mains power supply responsive to a determination that a mechanical output of said motor is to be boosted, until said electronic controller determines that a defined condition of said motor is met.

12. An induction motor control system for controlling an induction motor having a main winding and a secondary winding, the control system comprising:
a system, in particular as claimed in any one of claims 1 to 10, to control power to said secondary winding to start and run the motor at a first level of mechanical output; and
an electronic boost system to boost said level of mechanical output from said motor;
wherein said electronic boost system comprises a system to sense a current in said main winding and responsive to said sensing to boost electrical power to one or both of said main winding and said secondary winding responsive to said sensed current, and to cease said electrical power boost on determination that a defined condition of said motor is met.

13. An induction motor control system as claimed in claim 12 wherein said electronic boost system is configured to boost power in said main winding of said induction motor.

14. An induction motor control system as claimed in claim 13 wherein said electronic boost system is configured to perform one or both of:
increasing a proportion of a duty cycle of said AC mains power supply provided to said main winding, and selecting a tap on said main winding to select a portion of said main winding to which to apply said AC mains power supply.

15. A method of operating an induction motor of a refrigerator compressor, the induction motor having a main winding and a secondary winding, the method comprising:
operating said induction motor;
sensing a current in said main winding;
boosting power to one or both of said mains and secondary windings responsive to said sensed current to boost a maximum available output torque of said motor by at least 25%; and
ceasing said power boost on determination that a defined condition of said motor is met.
